# EUROPÄISCHE PATENTSCHRIFT

(11) **EP 4 475 683 B1**
(45) Veröffentlichungstag und Bekanntmachung des Hinweises auf die Patenterteilung: **01.04.2026**
(21) Anmeldenummer: 23706699.8
(22) Anmeldetag: 07.02.2023
(51) Int. Cl.: A22C 11/00, A22C 15/00, A22C 11/12

(54) **VERFAHREN UND VORRICHTUNG ZUM HERSTELLEN VON WURSTKETTEN**
METHOD AND DEVICE FOR PRODUCING SAUSAGE CHAINS
PROCEDE ET DISPOSITIF DE PRODUCTION DE CHAINES DE SAUCISSES

(30) Priorität: 09.02.2022 DE 102022103017
(43) Veröffentlichungstag der Anmeldung: 18.12.2024
(73) Patentinhaber: PEME SA, 6572 Quartino (CH)
(72) Erfinder: PEDROIA, Stefano, 6572 Quartino (CH)
(74) Vertreter: Patentanwälte und Rechtsanwalt Weiß, Arat & Partner mbB
(86) Internationale Anmeldenummer: PCT/EP2023/052917
(87) Internationale Veröffentlichungsnummer: WO 2023/152104

(56) Entgegenhaltungen:
- EP-A1- 3 241 447
- EP-A2- 2 322 040
- US-A1- 2008 139 095
- US-B1- 6 523 462
- POLY-CLIP SYSTEM: "Poly-clip System - FCHL - Automatic Clipping/Hanging Machine - Clip-/Aufhängeautomat", 1 August 2019 (2019-08-01), XP093043443, Retrieved from the Internet <URL:https://www.youtube.com/watch?v=IynykRa1N3k> [retrieved on 20230502]

## Beschreibung

### Technisches Gebiet

Die Erfindung betrifft ein Verfahren zum Herstellen von Wurstketten, bestehend aus zumindest zwei Würsten, mittels einer Wurstmasse in eine Wursthülle einfüllenden Füllmaschine, wobei die Wurstkette zur Herstellung von zwei getrennten Würsten zwischen diesen Würsten abgebunden wird, sowie eine Vorrichtung hierfür.

### Stand der Technik

Zur Herstellung von Würsten wird üblicherweise eine Wurstmasse, welche auch als Brät bezeichnet wird, mittels einer Mischeinrichtung hergestellt und in einer Füllmaschine in eine Wursthülle abgefüllt. Feinbrät wird zum Beispiel mit einem Zerkleinerer oder Kutter fertiggestellt. Rohwurst wird gewolft und dann kurz gemischt, beispielsweise in einem Mischer oder Kutter, sodass eine Bindung zwischen Fett und Magerfleisch entsteht.

In der Regel geschieht diese Herstellung nicht nur für eine einzelne Wurst, sondern der Wirtschaftlichkeit halber als Wurstketten, wie aneinandergereihte Würste bezeichnet werden. Dabei werden Würste von gewünschter Länge voneinander abgetrennt, was in der Regel durch ein Abdrehen oder durch ein Abbinden erfolgt. Beim Abdrehen werden zwei benachbarte Würste mehrfach um ihre Trennstelle gedreht, so dass das Brät nach beiden Richtungen in die Wursthüllen zurückgedrückt wird und eine Trennstelle zwischen den beiden Würsten entsteht, bei der ein Übertritt von Wurstmasse von der einen Wurst zur anderen Wurst verhindert wird.

Derart hergestellte Würste werden oftmals in langen Ketten hergestellt, wobei sie nach einer Füllmaschine an Haken aufgehängt und zu einer Weiterverarbeitung, beispielsweise zu einer Aufreihung auf einen Rauchstock, transportiert werden.

Eine derartige Anlage wird beispielsweise in der EP 2 322 040 B1 gezeigt, wonach die gefüllten und durch die Abdrehstellen aufgeteilten Wursthüllen in Schlaufen gelegt und von Haken übernommen werden. Dabei werden eine Vielzahl von Würsten aufeinanderfolgend an Haken aufgehängt, die dann von Rauchspiessen oder Rauchstöcken übernommen und in einer Räucherkammer weiterbearbeitet werden.

Bevor sie allerdings in die Räucherkammer gelangen, werden die einzelnen Wurstketten zwischen den einzelnen Haken zu Kettenabschnitten von beispielsweise sechs oder acht Würsten voneinander getrennt, damit sie für die weitere Be- und Verarbeitung leichter handhabbar sind. Dieses Trennen geschieht noch heute in der Regel von Hand, wobei allerdings nicht an den Abdrehstellen getrennt wird, da dann sofort bei beiden voneinander getrennten Würsten Brät austreten würde und beide Würste verloren sind. Deshalb wird in der Regel eine Wurst zwischen zwei Abdrehstellen durchtrennt, die auch als "Opferwurst" bezeichnet wird. Diese Opferwurst wird etwa in der Mitte durchgeschnitten, das Brät ausgedrückt und die Wursthülle zur vorangegangenen bzw. nachfolgenden Wurst verknotet. Andere Möglichkeiten, das Wurstende zu verschliessen, sind von Hand durch Clipse zu verschliessen oder zu verschweissen. Meist wird auch das Wurstende noch mit anderen Portionen verbunden, damit sich die am Haken hängenden portionierten Würste nicht aufdrehen. Gerade letzteres ist ein erhebliches Problem, was zu einem erheblichen Verlust führt.

Das Problem ist somit, dass sich nicht nur die Abdrehstelle vor und nach der durchgeschnittenen Wurst, sondern auch weitere Abdrehstellen von vorlaufenden bzw. folgenden Würsten aufdrehen, so dass die Verluste erheblich sind. Die Nachteile sind vor allem:
- Produktverlust und geringere Produktqualität, da die sogenannte Opferwurst ausgedrückt und der Wiederverwendung zugeführt werden soll. Beim Feinbrät ist es prinzipiell möglich, das ausgedrückte Produkt nochmals durch die Füllmaschine zu leiten. Bei einer hochwertigen Rohwurst ist dies nicht möglich, da die Produktqualität darunter leiden würde. D.h., für derartige Produktreste kommt nur in Frage, sie wegzuwerfen oder zu billigeren Produkten zu verarbeitet.

- Verlust von Wursthülle. Auf jeden Fall wird eine Wurstlänge pro Wurstkette/Rauchstock verloren, was mehr Kosten bedeutet.
- Handling. Das Wurstende muss verknotet werden, gleichzeitig muss aber auch darauf geachtet werden, dass nicht nachfolgende Würste aufdrehen. Das ausgedrückte Produkt muss zurück zur Füllmaschine gebracht und dort in den Trichter geworfen werden.

Mit diesem sehr ernsten Problem beschäftigt sich weder die EP 2 322 040 B1 noch beispielsweise die EP 2 689 665 B1 oder die EP 3 318 131 B1, die sich alle mit der Herstellung von Wurstketten mit durch Abdrehstellen getrennten Würsten befassen.

Bekannt sind auch Maschinen zum Abbinden von Würsten an einer Wurstkette. Dabei soll im Rahmen der vorliegenden Erfindung unter Abbinden jedes Verschliessen der Wursthülle an einer Abbindestelle verstanden werden. In erster Linie geschieht dieses Verschliessen über eine Schnur oder einen Faden, der dann von Abbindestelle zu Abbindestelle, auch über die Wurstlänge hinweg, geführt wird. Unter dem Abbinden wird aber auch ein Verschliessen durch einen Clips, ein Verknoten oder ein Verschweissen verstanden. Jede Form des Verschliessens soll von der vorliegenden Erfindung umfasst sein.

Derartige Maschinen zum Abbinden von Würsten an einer Wurstkette werden beispielsweise in der WO 2019 185693 A1, der WO 2018 234520 A1 oder der DE 10 2017 115 090 B4 aufgezeigt. Allerdings wird dieses Abbinden an Abbindestellen nur für Würste mit einem relativ grossen Durchmesser und einer hohen Qualität verwendet, wobei nach der Abbindemaschine in der Regel ein Abschneiden der einzelnen Würste, ggf. auch als Wurstpaar, von einer Wurstkette erfolgt. Das Abbinden findet keine Anwendung auf lange Würste an einer sehr langen Wurstkette, wie beispielsweise Wienerle, Bockwurst od. dgl..

Vor diesem Hintergrund ist zudem das Video Poly-Clip System: "Poly-clip System - FCHL - Automatic Clipping/Hanging Machine - Clip-ZAufhängeautomat", 1. August 2019 (2019-08-01), XP093043443, Gefunden im Internet: URL:https:/Z www.youtube.com/watch?v=IynykRa1 N3k [gefunden am 2023-05-02] anzuführen. Dort wird die Eröffnung einer großen Fleischverarbeitungsanlage in Russland im Jahr 2018 gezeigt. Insbesondere wird dort die Verwendung und der Betrieb einer von Poly-Clip System GmbH hergestellten Vorrichtung (FCHL Clip-/Aufhängeautomat) offenbart.

Schließlich ist noch die US 6 523 462 B1 anzuführen. Dort wird offenbart, dass eine Aufhängelinie zum Aufhängen der Wurstketten dem Abbinden nachgeschaltet wird.

### Aufgabe der Erfindung

Die Aufgabe der vorliegenden Erfindung ist es, ein Verfahren anzubieten, welches die oben erwähnten Nachteile der bisherigen Verfahren beim Herstellen von Wurstketten vermeidet.

### Lösung der Aufgabe

Zur Lösung der Aufgabe führt, dass ein Hüllenstück zwischen zwei beabstandeten Abbindestelle mit einem Wurstrest in einer Blase gefüllt wird, wobei diese Blase dem Personal eine Trennstelle der Wurstkette signalisiert. Das bedeutet, dass k die Würste nach der Abbindemaschinein in einer Kette verbleiben und bevorzugt an Haken der Aufhängelinie aufgehängt werden, bis eine Vielzahl von Haken gefüllt sind und die in Schlaufen gelegten Wurstketten dann beispielsweise an einen Rauchstock übergeben werden.

Wesentlicher Teil der Erfindung ist dabei, dass jede einzelne Trennstelle zwischen zwei Würsten abgebunden wird, so dass in keinem Fall ein Aufdrehen geschehen kann und es wieder zu einem Verlust von Wurstmasse kommt. Wie oben erwähnt, geschieht das Abbinden bevorzugt mittels einer Schnur oder eines Fadens, der von Trennstelle zu Trennstelle geführt wird. Im Rahmen der Erfindung liegen aber auch die anderen oben erwähnten Möglichkeiten zum Verschliessen der Wursthülle an einer Trenn- oder Abbindestelle.

Ein weiterer wesentlicher Teil der Erfindung ist aber darauf gerichtet, dass die Trennstelle, von der später einzelne Ketten voneinander getrennt werden sollen, mit zumindest zwei Abbindestellen versehen werden. Diese Abbindestellen sind bevorzugt so voneinander beabstandet, dass zwischen beiden ein Trennen durchgeführt werden kann, ohne dass die Abbindestelle beschädigt wird. Beispielsweise kann dieses Abtrennen eine Person mit einer Schere vornehmen, so dass gleichzeitig auch eine ggf. vorhandene Schnur durchtrennt wird. Auch beispielsweise zwei voneinander beabstandete Clipse signalisieren dem Personal, dass zwischen den beiden Clipsen ein Abtrennen stattfinden kann.

Es ist dabei vorgesehen, ein Hüllenstück zwischen den beiden beabstandeten Abbindestellen mit einem Wurstrest zu füllen, so dass eine Blase erkennbar ist. Diese Blase zeigt dem Personal, dass an dieser Stelle getrennt werden soll, wobei lediglich ein geringfügiger Wurstrest verbleibt, der ohne weiteres ausgedrückt werden kann.

Von der vorliegenden Erfindung umfasst ist auch eine Vorrichtung zum Herstellen von Wurstketten, bestehend aus zumindest zwei Würsten, mittels einer Wurstmasse in eine Wursthülle einfüllenden Füllmaschine, wobei zwischen Füllmaschine und Aufhängelinie eine Abbindeeinrichtung angeordnet ist. Diese Abbindeeinrichtung wird so gesteuert, dass sie zwischen zwei Würsten zumindest immer eine Abbindestelle erzeugt. Nach einer gewissen Anzahl von Würsten erzeugt sie aber zumindest zwei beabstandete Abbindestellen, zwischen denen dann die einzelnen Wurstketten voneinander getrennt werden sollen.

Zur besseren Kenntlichmachung der Trennstelle ist vorgesehen, dass zwischen zwei Abbindestellen noch ein Hüllenstück mit einem Wurstrest gefüllt wird. Eine dadurch gebildete Blase signalisiert dem Personal, dass ein Trennen an dieser Stelle erfolgen soll.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
**Figur 1** eine schematische Seitenansicht einer aufgehängten Wurstkette nach dem Stand der Technik;
**Figur 2** eine schematisch dargestellte Seitenansicht der Wurstkette nach Figur 1 nach dem Durchtrennen einer "Opferwurst" nach dem Stand der Technik;
**Figur 3** eine Seitenansicht von zwei Wurstkettenabschnitten nach einem unerwünschten Aufdrehen nach dem Verfahren nach dem Stand der Technik;
**Figur 4** eine Seitenansicht der getrennten Wurstketten nach einer Verdrehsicherung nach dem Stand der Technik;
**Figur 5** eine diagrammartige Darstellung einer erfindungsgemässen Vorrichtung zum Herstellen von Wurstketten;
**Figur 6** eine vergrössert dargestellte Draufsicht auf zwei Würste, die an einer Abbindestelle getrennt sind;
**Figur 7** eine Draufsicht auf zwei Würste mit einer erfindungsgemässen Trennstelle aus zwei Abbindestellen;
**Figur 8** eine Draufsicht von zwei Würsten entsprechend Figur 7 in einer verbesserten Ausführungsform.

### Ausführungsbeispiel

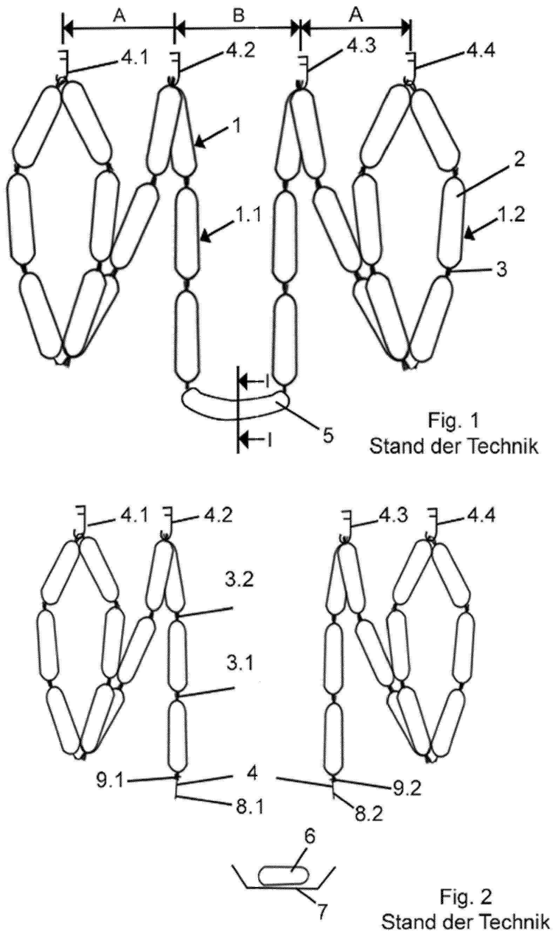

In Figur 1 ist ein Ausschnitt aus einer Wurstkette 1 gezeigt, die aus einer Mehrzahl von Würsten 2 besteht, die über Abdrehstellen 3 miteinander verbunden sind. Die Wurstkette 1 hängen in einer Aufhängelinie an Haken 4.1 bis 4.4. Dabei weisen die Haken 4.1 und 4.2 sowie 4.3 und 4.4 einen Abstand A auf, der kleiner ist als ein Abstand B zwischen den Haken 4.2 und 4.3. Dies bedeutet sichtbar für das Personal, dass hier einzelne Kettenabschnitte 1.1 und 1.2 voneinander an dieser Stelle getrennt werden sollen. In diesem Abstand B befindet sich zwischen den beiden Kettenabschnitten 1.1 und 1.2 eine sogenannte Opferwurst 5, die zum Trennen der Kettenabschnitte 1.1 und 1.2 entlang einer Schnittlinie I-I getrennt wird.

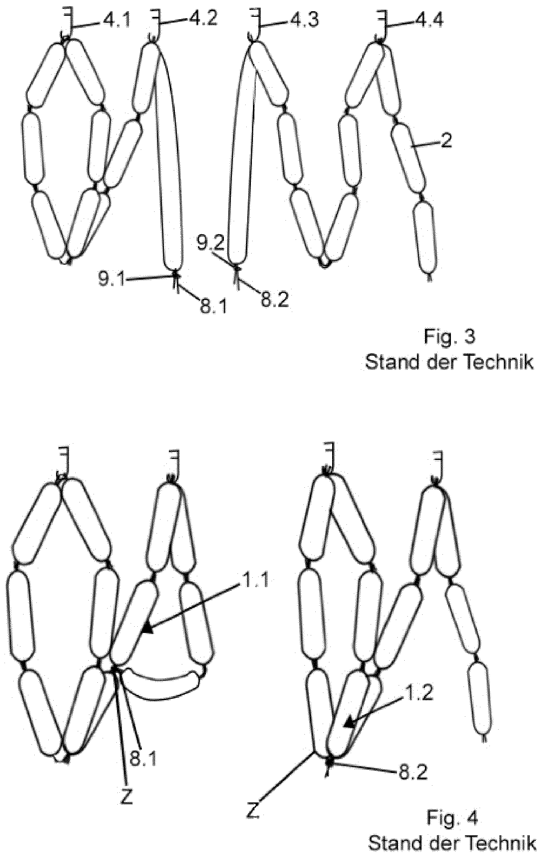

In Figur 2 ist die Situation nach dem Trennen der Opferwurst schematisch dargestellt, wobei Wurstmasse 6 aus der Opferwurst von einer Schale 7 aufgefangen wird. Die beiden Hüllenteile 8.1 und 8.2 der Opferwurst müssen, damit sich die nachfolgende bzw. folgende Wurst nicht entleert, mit einem Knoten 9.1 bzw. 9.2 versehen werden. Dieses Verknoten allein genügt aber nicht, da die grosse Gefahr besteht, dass sich weitere auf den Knoten 9.1 bzw. 9.2 folgende Abdrehstellen 3.1 und 3.2 aufdrehen und diese Würste bzw. deren Wurstmasse ineinander übergehen, wie dies in Figur 3 gezeigt ist. Auch diese Würste sind für eine weitere Verarbeitung verloren.

Die einzige Möglichkeit dieses Aufdrehen zu verhindern ist in Figur 4 dargestellt, in welcher die Hüllenteile 8.1 bzw. 8.2 mit Teilen der Kettenabschnitte 1.1 bzw. 1.2 verknotet werden.

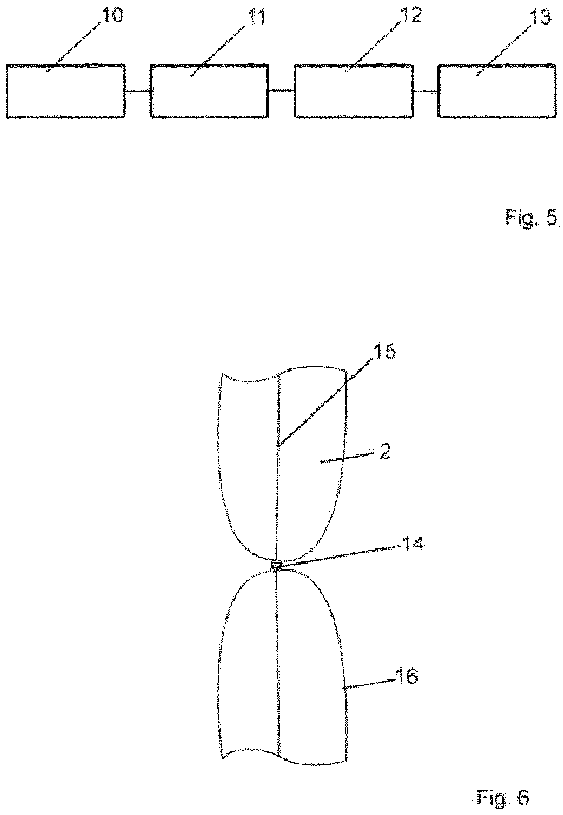

Gemäss der vorliegenden Erfindung besteht nun nach Figur 5 eine gesamte Vorrichtung zum Herstellen von Wurstketten aus einer Füllmaschine 10, auf die eine Abbindemaschine 11 und darauf eine Aufhängelinie 12 folgt. Dieser Aufhängelinie kann eine beliebige Einrichtung zur Weiterverarbeitung nachfolgen, beispielsweise eine Übergabeeinrichtung der Wurstketten auf Rauchstöcke.

D.h., in der Füllmaschine, auf der beispielsweise ein Trichter für eine Wurstmasse aufsitzt, wird Wurstmasse (Brät) in eine Wursthülle abgefüllt, die dann weiter zu der Abbindemaschine 11 transportiert wird. In der Abbindemaschine 11 erfolgt ein Abbinden der einzelnen Würste voneinander, so dass hier eine Wurstkette entsteht. Diese Wurstkette gelangt dann in die Aufhängelinie 12 und wird dort beispielsweise in Schlaufen an Haken aufgehängt. Dort erfolgt auch ein Abtrennen einzelner Kettenstücke 1.1 und 1.2. Von der Aufhängelinie 12 gelangt die Wurstkette an den Haken in die Übergabeeinrichtung 13,.

Bei einer Mehrzahl von Würsten 2 wird zwischen zwei Würsten gemäss Figur 6 eine einfache Abbindestelle 14 dadurch gezeugt, dass eine Schnur 15 mehrfach um eine Wursthülle 16 geschlungen und diese eingeschnürt wird. Hierdurch werden die beiden Würste voneinander getrennt.

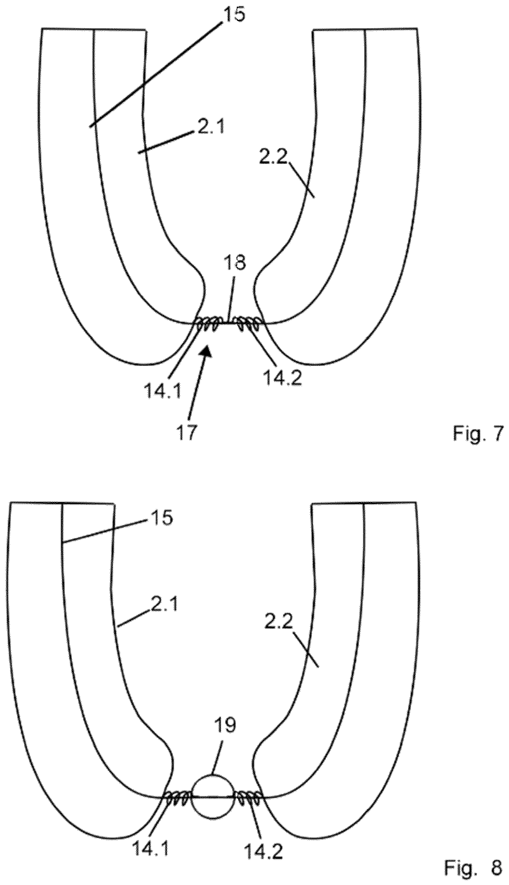

In Figur 7 ist nun der Bereich einer Trennstelle 17 gezeigt, an welcher Kettenabschnitte 1.1 und 1.2 voneinander getrennt werden sollen. Hier befinden sich zwischen zwei Würsten 2 zwei Abbindestellen 14.1 und 14.2, die ein Hüllenstück 18 zwischen sich freilassen, in welchem sich keine Wurstmasse oder nur eine geringe Menge Wurstmasse befindet. In diesem Bereich erfolgt dann die Trennung der Kettenabschnitte voneinander. Die beiden Abbindestellen 14.1 und 14.2 gewährleisten aber, dass aus den Würsten 2 keine Wurstmasse austritt und dass auch die nachfolgenden Würste nicht aufdrehen.

In Figur 8 dargestellt, dass sich zwischen den beiden Abbindestellen 14.1 und 14.2 ein Wurstrest in dem Hüllenstück 18 befindet, so dass dieses zu einer Blase 19 aufgequollen ist. Diese Blase 19 signalisiert dem Personal, dass an dieser Stelle ein Trennen stattfinden soll. Mit diesem Wurstrest in der Blase 19 ist aber nur ein sehr geringer Produktverlust verbunden, wobei dieser Rest auch in der Regel nicht weiterverwertet wird.

Insgesamt hat dieses neue Verfahren und die neue Vorrichtung den erheblichen Vorteil, dass keinerlei Aufdrehen der Wurstkettenabschnitte nach der Trennstelle stattfinden kann und somit der Produktverlust erheblich minimiert ist. Ferner muss kein Brät entsorgt oder beurteilt werden, ob es für ein erneutes Einfüllen geeignet ist. Die Länge der Wurstkette bzw. die Länge der Wurstkettenabschnitte wird nicht verringert. Das Personal ist nicht zu kompliziertem Handling, wie beispielsweise einem Verknoten mit anderen Teilen der Wurstkettenabschnitte, genötigt und erkennt, an welcher Stelle die Wurstkette getrennt werden soll.

**Bezugszeichenliste**

| | | | | | |
|---|---|---|---|---|---|
| 1 | Wurstkette | 34 | | | |
| 2 | Wurst | 35 | | | |
| 3 | Abdrehstelle | 36 | | | |
| 4 | Haken | 37 | | A | Abstand |
| 5 | Opferwurst | 38 | | | |
| 6 | Wurstmasse | 39 | | B | Abstand |
| 7 | Schale | 40 | | | |
| 8 | Hüllenteil | 41 | | | |
| 9 | Knoten | 42 | | | |
| 10 | Füllmaschine | 43 | | | |
| 11 | Abbindemaschine | 44 | | | |
| 12 | Aufhängelinie | 45 | | | |
| 13 | Übergabeeinrichtung | 46 | | | |
| 14 | Abbindestelle | 47 | | | |
| 15 | Schnur | 48 | | | |
| 16 | Wursthülle | 49 | | | |
| 17 | Trennstelle | 50 | | | |
| 18 | Hüllenstück | 51 | | | |
| 19 | Blase | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zum Herstellen von Wurstketten (1), bestehend aus zumindest zwei Würsten (2), mittels einer Wurstmasse (6) in eine Wursthülle (16) einfüllenden Füllmaschine (10), wobei die Wurstkette (1) zur Herstellung von zwei getrennten Würsten (2.1, 2.2) zwischen diesen Würsten (2.1, 2.2) wahlweise an einer oder an zwei voneinander beabstandeten Abbindestellen (14,14.1,14.2) abgebunden wird und wobei eine Aufhängelinie (12) zum Aufhängen der Wurstketten (1) dem Abbinden nachgeschaltet wird,
**dadurch gekennzeichnet,**
**dass** wenn zwischen zwei Würsten (2) zwei Abbindestellen (14.1, 14.2) vorgesehen sind, zwischen den zwei Abbindestellen (14.1, 14.2) entweder ein Hüllenstück (18) frei bleibt, in welchem sich keine Wurstmasse oder nur eine geringe Menge Wurstmasse befindet, oder dass ein Hüllenstück (18) zwischen zwei beabstandeten Abbindestellen (14.1,14.2) mit einem Wurstrest in einer Blase (19) gefüllt wird, wobei diese Blase (19) eine Trennstelle der Wurstkette (1) signalisiert.

2. Vorrichtung zum Herstellen von Wurstketten (1), bestehend aus zumindest zwei Würsten (2), mittels einer Wurstmasse (6) in eine Wursthülle (16) einfüllenden Füllmaschine (10) und einer Abbindeeinrichtung (11) und einer Aufhängelinie (12), wobei die Abbindeeinrichtung (11) zwischen der Füllmaschine (10) und der Aufhängelinie (12) angeordnet ist, wobei durch die Abbindeeinrichtung (11) zwischen zwei Würsten (2.1, 2.2) wahlweise eine oder zwei Abbindestellen (14.1,14.2) erzeugbar ist/sind,
**dadurch gekennzeichnet,**
**dass** zwischen zwei Abbindestellen (14.1,14.2) entweder ein Hüllenstück (18) frei bleibt, in welchem sich keine Wurstmasse oder nur eine geringe Menge Wurstmasse befindet, oder ein Hüllenstück (18) für einen Wurstrest in einer Blase (19) vorgesehen ist.

## Claims

1. Method for producing sausage chains (1) consisting of at least two sausages (2), by means of a filling machine (10) that fills a sausage mass (6) into a sausage casing (16), wherein the sausage chain (1) is tied for producing two separate sausages (2.1, 2.2) between said sausages (2.1, 2.2), selectively at one or at two mutually spaced tying points (14, 14.1, 14.2), and wherein a suspension line (12) for suspending the sausage chains (1) is connected downstream of the tying,
**characterised in that**
when two tying points (14.1. 14.2) are provided between two sausages (2), either one casing piece (18) remains free between the two tying points (14.1, 14.2), in which casing piece there is no sausage mass or only a small amount of sausage mass, or **in that** one casing piece (18) between two spaced apart typing points (14.1, 14.2) is filled with a sausage remainder in a bubble (19), wherein said bubble (19) signals a separating point of the sausage chain (1).

2. Device for producing sausage chains (1) consisting of at least two sausages (2), by means of a filling machine (10) that fills a sausage mass (6) into a sausage casing (16), and a tying device (11), and a suspension line (12), wherein the tying device (11) is arranged between the filling machine (10) and the suspension line (12), wherein selectively one or two tying points (14.1, 14.2) can be created between two sausages (2.1, 2.2) by the tying device (11),
**characterised in that**
between two tying points (14.1, 14.2) either one casing piece (18) remains free, in which there is no sausage mass or only a small amount of sausage mass, or a casing piece (18) for a sausage remainer in a bubble (19) is provided.

## Revendications

1. Procédé de fabrication de chapelets de saucissons ou de saucisses (1) composés d'au moins deux saucisses (2), au moyen d'une machine de remplissage (10) remplissant un boyau de saucisse (16) avec de la pâte à saucisse (6),
dans lequel, pour fabriquer deux saucisses séparées (2.1, 2.2), le chapelet de saucisses (1) est ficelé entre ces saucisses (2.1, 2.2) au choix à un ou deux points de ficelage (14, 14.1, 14.2) espacés l'un de l'autre, et
une ligne de suspension (12) est prévue en aval du dispositif de ficelage pour suspendre les chapelets de saucisses (1),
**caractérisé en ce que**
lorsque deux points de ficelage (14.1, 14.2) sont prévus entre deux saucisses (2), soit un morceau de boyau (18) reste libre entre les deux points de ficelage (14.1, 14.2), ledit morceau ne contenant pas de pâte à saucisse ou seulement une petite quantité de pâte à saucisse, soit un morceau de boyau (18) est rempli d'un reste de pâte à saucisse dans une vessie (19) entre deux points de ficelage espacés (14.1, 14. 2), cette vessie (19) signalant un point de séparation dans le chapelet de saucisses (1).

2. Dispositif pour la fabrication de chapelets de saucissons ou de saucisses (1) composés d'au moins deux saucisses (2), au moyen d'une machine de remplissage (10) remplissant un boyau de saucisse (16) avec de la pâte à saucisse (6), et au moyen d'un dispositif de ficelage (11) et d'une ligne de suspension (12),
dans lequel le dispositif de ficelage (11) est disposé entre la machine de remplissage (10) et la ligne de suspension (12),
le dispositif de ficelage (11) permet de créer au choix un ou deux points de ficelage (14.1, 14.2) entre deux saucisses (2.1, 2.2),
**caractérisé en ce que**
entre deux points de ficelage (14.1, 14.2), soit un morceau de boyau (18) reste libre, ne contenant pas de pâte à saucisse ou seulement une petite quantité de pâte à saucisse, soit un morceau de boyau (18) est prévu pour contenir un reste de pâte à saucisse dans une vessie (19).
